# EUROPÄISCHE PATENTSCHRIFT

(11) **EP 0 593 927 B1**
(45) Veröffentlichungstag und Bekanntmachung des Hinweises auf die Patenterteilung: **04.11.1998**
(21) Anmeldenummer: 93115332.4
(22) Anmeldetag: 23.09.1993
(51) Int. Cl.: G02B 6/44

(54) **Gestell mit Einsätzen zur Führung von LWL-Kabeln**
Rack with inserts for guiding optical cables
Etagère de rangement à tiroirs pour guider des câbles optiques

(30) Priorität: 20.10.1992 DE 4235208
(43) Veröffentlichungstag der Anmeldung: 27.04.1994
(73) Patentinhaber: ALCATEL ALSTHOM COMPAGNIE GENERALE D'ELECTRICITE, 75008 Paris (FR)
(72) Erfinder: Amberger, Reinhard, D-70499 Stuttgart (DE)
(74) Vertreter: Pohl, Herbert, Dipl.-Ing.

(56) Entgegenhaltungen:
- EP-A- 0 463 749
- WO-A-91/10927
- DE-A- 4 034 832
- US-A- 4 372 511
- US-A- 4 840 449
- IBM TECHNICAL DISCLOSURE BULLETIN, Bd.31, Nr.12, Mai 1989, NEW YORK US Seiten 70 - 71 'FIBER-OPTIC CABLE BOOT'

## Beschreibung

Die Erfindung betrifft ein Gestell der im Oberbegriff des Anspruchs 1 näher bezeichneten Ausführung. Derartige Gestelle werden insbesondere in Einrichtungen der optischen Nachrichtentechnik verwendet.

Bei der Verkabelung von Gestellen mit Lichtwellenleitern ist besonders darauf zu achten, daß die Lichtwellenleiter nicht geknickt werden und beim Biegen einen Mindestradius nicht unterschreiten. Daher laufen bei einem beispielsweise aus der DE 35 27 914 C2 bekannten Gestell die von einem Kabelrost oben kommenden Lichtwellenleiter zunächst an einem rückwärtigen Gestellholm entlang abwärts und sind an diesem mit Kabelbindern befestigt. An Abzweigungen zu Geräteeinsätzen hängen die Lichtwellenleiter dann in einer großen Schleife durch, laufen wieder nach oben und sind jeweils durch eine trichterförmige Tülle geführt, bevor sie in horizontal angeordnete Steckverbinder münden. Diese Verkabelung ist hier an der Gestellrückseite vorgesehen.

Bekannt sind jedoch auch frontseitig verkabelte Gestelle. Die vom Kabelrost kommenden LWL-Kabel laufen an einem oder beiden vorderen Gestellholmen entlang abwärts und sind an diesen entweder mit Kabelbindern befestigt oder werden lose in einem am Gestellholm angebrachten Kabelkanal geführt. An den Abzweigungen sind die LWL-Kabel in unterhalb von Baugruppen an der Frontseite des Gestells horizontal angeordnete Führungsschienen eingelegt, mit undefiniertem Radius hochgebogen und an die einzelnen Baugruppen gesteckt.

Aus der EP-A-0 463 749 ist ein in einem Gestell befestigter Einsatz bekannt, , der im wesentlichen aus einer Bodenplatte, zwei Seitenwänden und einer Rückwand besteht. Die Seitenwände haben Ausnehmungen zur Durchführung von LWL-Kabeln und der vorn offene Einsatz ist mit einem separaten Abdeckstreifen verschließbar, der zusammen mit dem Einsatz an die Gestellholme geschraubt wird. Der Abdeckstreifen ist dabei so ausgebildet, daß im Einsatz z.B. ringförmig abgelegte Überlängen der LWL-Kabel einerseits gegen Herausfallen geschützt sind und andererseits herausgeführt und mit Steckverbindern an Baugruppen gesteckt werden können, die ein im Gestell über dem Einsatz angeordneter Baugruppenträger enthält.

Die Druckschrift WO-A-91/10927 beschreibt außerdem ein Verteilergestell, das mit Gehäusen für die Aufnahme von z.B. Spleißkassetten bestückt ist, und bei dem über dem Verteilergestell Kabelkanäle angeordnet sind, in denen im wesentlichen horizontal verlegte LWL-Kabel über bogenförmige Kabelleitbleche vertikal in die verschiedenen Gestelle einlaufen. Nach dem Passieren von an den seitlichen Gestellholmen befestigten rahmenförmigen Kabelführungen zweigen die LWL-Kabel zu den einzelnen Spleißkassetten horizontal ab.

Bei den Kabelleitblechen handelt es sich beispielsweise um mehr oder weniger stark gekrümmte Seitenwände der Kabelkanäle, Kabelkanalböden, aus den Böden der Kabelkanäle heraus abgebogene Streifen oder um separate, an die Kabelkanäle angesetzte Kabelleitbleche.

Aus dem DE 87 12 895 U1 ist zur Führung von Glasfaserleitungen in Gestellen ferner die Verwendung von trompetenartig geformten, längsgeschlitzten Trichtern bekannt, in welche die Glasfaserleitungen bei der Verkabelung der Gestelle von der Seite eingelegt werden. Mit den Trichtern wird sichergestellt, daß die Glasfaserleitungen bei der Verlegung einen bestimmten Krümmungsradius nicht unterschreiten können.

Der Erfindung liegt die Aufgabe zugrunde, bei einem Gestell der im Oberbegriff des Anspruchs 1 genannten Art die Zuführung der LWL-Kabel zu den Steckverbindern der Baugruppen so zu gestalten, daß die Gefahr des Knickens, Quetschens oder Unterschreitens des zulässigen Krümmungsradius der LWL-Kabel, insbesondere bei Montage und Wartung, weitgehend ausgeschlossen ist. Diese Aufgabe wird erfindungsgemäß mit den im Anspruch 1 genannten Merkmalen gelöst. Vorteilhafte Ausgestaltungen des Gegenstandes des Anspruchs 1 sind den Unteransprüchen zu entnehmen.

Die Lösung hat unter anderem den Vorteil, daß die von den verschiedenen Baugruppen kommenden LWL-Kabel unter Ausnutzung nahezu der gesamten Gestellbreite in den Einsatz eintauchen können, wobei es möglich ist bereits vorher festzulegen, ob sie in den linken oder rechten Verkabelungsschacht des Gestells einmünden sollen oder von den beiden Verkabelungsschächten ankommende LWL-Kabel an der Frontseite zusammen zu führen. Obwohl die einzelnen Baugruppen häufig bis zu vier angeschlossene LWL-Kabel haben, ist sichergestellt, daß diese vom Gestellkabelrost weg und durch die Einsätze hindurch übersichtlich und mit dem zulässigen Mindestradius bis zu den Baugruppen geführt werden können. Weitere Vorteile sind der Beschreibung entnehmbar.

Die Erfindung wird anhand eines in Zeichnungen dargestellten Ausführungsbeispieles wie folgt näher beschrieben. In den Zeichnungen zeigen:
- Fig. 1: ein Gestell und mehrere mit Baugruppen bestückte Baugruppenträger, denen je ein Einsatz zur Führung von LWL-Kabeln zugeordnet ist, in der Vorderansicht;
- Fig. 2: einen vergrößert dargestellten Einsatz der Fig. 1, teilweise ausgeschnitten, in perspektivischer Ansicht.

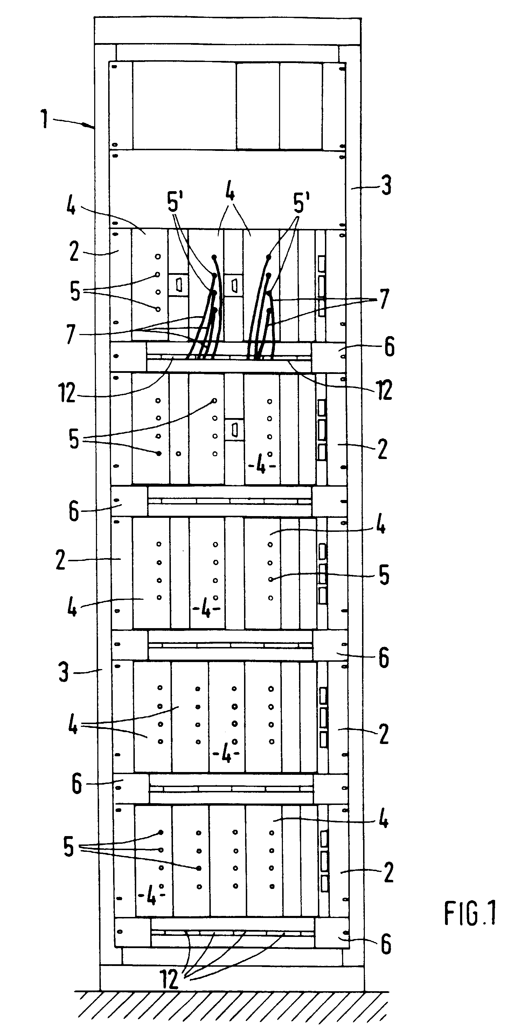

In Fig. 1 ist ein Gestell der in der Nachrichtentechnik bekannten Bauweise mit 1 bezeichnet. Im Gestell 1 sind üblicherweise mehrere Baugruppenträger 2 übereinander angeordnet und jeweils an den beiden vorderen Gestellholmen 3 befestigt. Die Baugruppenträger 2 enthalten unter anderem als Steckmodule ausgebildete Baugruppen 4. Je nach Bestückung des Baugruppenträgers 2 hat die überwiegende Anzahl Baugruppen 4 mindestens einen an der Frontseite angebrachten Steckverbinder 5, an den ein komplementärer Steckverbinder 5' der Frontverkabelung des Gestells 1 lösbar angesteckt ist. Bei Vollausbau des Gestells 1 ist zur Führung der Verkabelung unterhalb jedes Baugruppenträgers 2 ein Einsatz 6 an den Gestellholmen 3 befestigt.

Wie das in Fig. 1 dargestellte Ausführungsbeispiel des Gestells 1 zeigt, haben die Baugruppen 4 vorzugsweise jeweils vier in einer Reihe übereinander angeordnete Steckverbinder 5. Die nur schematisch dargestellten Steckverbinder 5 sind nach unten weisend montiert und mit je einem LWL-Kabel 7 verbunden.

Letztere kommen von einem beispielsweise über dem Gestell 1 angeordneten Kabelrost (nicht dargestellt), durchlaufen einen von zwei Verkabelungsschächten, die jeweils von einem rückwärtigen Gestellholm, den Baugruppenträgern 2 und dem vorderen Gestellholm 3 sowie ggf. von seitlich vorhandenen Gestellverkleidungen begrenzt werden und sind dann durch die Einsätze 6 zu den Steckverbindern 5 der Baugruppen 4 geführt. Je nach Ausbreitungsrichtung der Lichtwellen sind die durch die Verkabelungsschächte geführten Kabel ankommende und/oder abgehende LWL-Kabel 7.

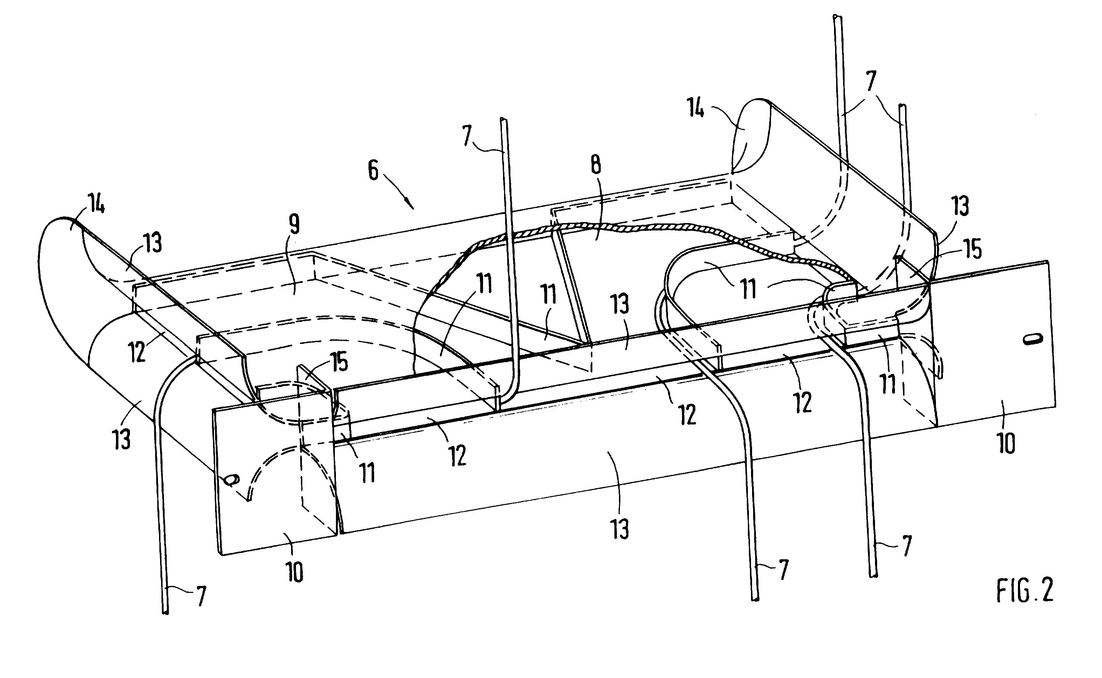

Der in Fig. 2 für sich allein dargestellte Einsatz 6 besteht im wesentlichen aus einer Bodenplatte 8, einer Deckplatte 9, zwei Seitenwinkeln 10 sowie mehreren, zwischen Boden- und Deckplatte 8, 9 angeordneten Führungselementen 11, die das Innere des Einsatzes 6 in mehrere Kabelkanäle 12 unterteilen. Der Einsatz 6 ist an die Gestellbreite angepaßt jedoch beispielsweise nur etwa halb so tief wie das Gestell 1 und hat daher vorzugsweise eine rechteckige Form. Eine Längsseite des Einsatzes 6 bildet die Frontseite, an der und den beiden kürzeren Seitenteilen die Kanten der Bodenplatte 8 jeweils mit einem Mindestradius von 35 mm abgebogen sind. Da Boden- und Deckplatte 8, 9 aus identischen, spiegelbildlich zueinander montierten Teilen bestehen, bilden die Abbiegungen 13 an den Eintritts- und Austrittsöffnungen des Einsatzes 6 trompetenförmige Trichter zur Umlenkung von LWL-Kabeln 7 aus der Vertikalen in die Horizontale und umgekehrt.

Die Führungselemente 11, welche die LWL-Kabel 7 innerhalb des Einsatzes 6 umlenken, bestehen aus schmalen, hochkant stehenden Streifen, von denen ein mittlerer z.B. V-förmige Gestalt hat. Dieser Streifen teilt mit der an der Frontseite des Einsatzes 6 liegenden Spitze die Kabelkanäle 12 in zwei, je einem Verkabelungsschacht des Gestells 1 zugeordnete Gruppen. Von den anderen Streifen sind die in den vorderen Ecken sitzenden J-artig geformt und mit dem geraden Schenkel frontseitig angeordnet, während ein oder mehrere weitere Streifen, die mit Abstand zueinander jeweils zwischen den J-artigen und dem V-förmigen Führungselement 11 vorgesehen sein können, eine einfache Bogenform haben. Sie erstrecken sich von der Eintritts- oder Austrittsöffnung an der Frontseite bis zu denen an den Seitenteilen des Einsatzes 6 und haben Radien, die mindestens 35 mm betragen oder größer sind. Die J-artigen und die bogenförmigen Führungselemente 11 der von Frontseite des Einsatzes 6 gesehen sich zum linken und zum rechten Seitenteil hin erstreckenden Kabelkanäle 12 sind ebenso identische, spiegelbildlich zueinander angeordnete Einzelteile wie die beiden Seitenwinkel 10.

Wie zuvor beschrieben wurde, ist die Tiefe des Einsatzes 6 bei dem vorliegenden Ausführungsbeispiel kleiner als das Gestell 1 und an den seitlichen Eintritts- und Austrittsöffnungen daher schmaler als die sich zwischen rückwärtigen und vorderen Gestellholmen 3 erstreckenden Verkabelungsschächte. Aus diesem Grund ist an den rückwärtigen Enden der Abbiegungen 13 je ein Führungsteil 14 angesetzt, das wie ein längshalbierter Trichter ausgebildet ist. Diese Führungsteile 14 werden vorzugsweise aus Kunststoff geformt und sie stellen sicher, daß von seitlich hinter dem Einsatz 6 ankommenden LWL-Kabeln 7 die Mindestbiegeradien beim Einlaufen in die Kabelkanäle 12 ebenfalls nicht unterschritten werden. Beide Führungsteile 14 sind von identischer Gestalt. Die Abbiegungen 13 und die längshalbierten Trichter wirken hier als die äußeren Führungselemente des Einsatzes 6. Den seitlichen Abschluß an der Vorderseite bilden die Seitenwinkel 10, mit denen der Einsatz 6 an der frontseitigen Befestigungsebene des Gestells 1 fixiert wird.

In Verlängerung des zur Einsatzrückseite weisenden Schenkels 15 sind die vorzugsweise aus Aluminiumblech hergestellten Seitenwinkel 10 mit einer kurzen, U-förmig nach innen gebogenen Halteschiene (nicht dargestellt) versehen. An dieser sind die z.B. aus Aluminiumblech gefertigten Boden- und Deckplatten 8, 9 z.B. mittels Schrauben oder Nieten befestigt. Die Streifen der Führungselemente 11, die mit beispielsweise 10 mm so hoch wie die kurzen, als Distanzteile wirkenden Halteschienen an den hinteren Schenkeln 15 der Seitenwinkel 10 sind, haben in Blechausführung an den schmalen Längsseiten unten und oben mehrere Lappen, die entsprechende Schlitze in Boden- und Deckplatte 8, 9 durchsetzen und mit denen die verschiedenen Teile z.B. durch Umbiegen, Verstemmen oder Verschränken der Lappen aneinander befestigt werden. Da der Einsatz 6 symmetrisch aufgebaut ist, läßt er sich aus nur wenigen verschiedenen Teilen, die einfach gestaltet und fertigungstechnisch sehr wirtschaftlich herstellbar sind, auf einfache Weise zusammenfügen. Sofern es zweckmäßig ist, können dabei beliebige Blechteile durch Kunststoffteile oder solche durch Blechteile ersetzt werden.

Bei einem Einbauraum im Gestell 1 sparenden, vereinfachten , nicht unter den Schutzbereich der Anspruch 1 fallenden Beispiel, des Einsatzes 6 entfallen die Abbiegungen an der Deckplatte 9. Diese besteht somit beispielsweise aus einer vollkommen planen Blechtafel, mit der die Bauhöhe des Einsatzes 6 wesentlich reduziert wird. Die Höhe der Seitenwinkel 10 ist dann entsprechend angepaßt. Die Verwendung von Einsätzen der vereinfachten Ausführung setzt voraus, daß von oben kommende LWL-Kabel 7 nach unten in einer Schleife durchhängen, bevor sie über die Abbiegungen 13 der Bodenplatte 8 in die Kabelkanäle 12 einlaufen oder diese verlassen.

## Patentansprüche

1. Gestell (1) für Einrichtungen der optischen Nachrichtentechnik, mit mehreren übereinander angeordneten Baugruppenträgern (2) und darin eingesetzten Baugruppen (4), die an der Frontseite angesteckte Steckverbinder (5) mit Lichtwellenleiter-Kabeln (7) haben, wobei unterhalb jedes Baugruppenträgers (2) ein mit einer Bodenplatte (8) versehener Einsatz (6) angeordnet ist, der an beiden Seitenteilen und an der Frontseite vorgesehene Eintritts- und Austrittsöffnungen für die Lichtwellenleiter-Kabel (7) hat, die aus seitlichen Verkabelungsschächten des Gestells (1) ankommen und/oder abgehen, **dadurch gekennzeichnet**, daß der Einsatz (6) aus der Bodenplatte (8), einer Deckplatte (9) und dazwischenliegenden inneren Führungselementen (11) zusammenfügt ist, daß die Führungselemente (11) innerhalb des Einsatzes (6) aus schmalen, hochkant stehenden Streifen mit jeweils mehreren, an den Längsseiten vorgesehenen Lappen bestehen, mit denen die Führungselemente (11) sowie die Boden- und die Deckplatte (8, 9) aneinander befestigt sind, und daß die Kanten von Bodenplatte (8) und Deckplatte (9) an der Frontseite des Einsatzes (6) und den beiden Seitenteilen je eine mit einem Mindestradius von 35 mm vorgenommene Abbiegung (13) aufweisen.

2. Gestell nach Anspruch 1, dadurch gekennzeichnet, daß die Bodenplatte (8) und die Deckplatte (9) des Einsatzes (6) aus identischen, spiegelbildlich zueinander montierten Teilen bestehen, deren Abbiegungen (13) an den Eintritts- und Austrittsöffnungen trompetenförmige Trichter zur Umlenkung von Lichtwellenleiter-Kabeln (7) bilden.

3. Gestell nach Anspruch 1 oder 2, dadurch gekennzeichnet, daß an den rückwärtigen Enden der Abbiegungen (13) des Einsatzes (6) je ein als längshalbierter Trichter ausgebildetes Führungselement (14) angesetzt ist.

## Claims

1. Rack (1) for optical communications apparatus, comprising a plurality of module carriers (2) arranged one above the other and modules (4) which are inserted therein and which have plug-and-socket connectors (5) connected to the front with optical waveguide cables (7), there being disposed underneath each module carrier (2) an insert (6) which is provided with a base plate (8) and which has inlet and outlet openings which are provided on both side parts and on the front for the optical waveguide cables (7) which enter from and/or exit to lateral cable chutes in the rack (1), characterized in that the insert (6) is made up of the base plate (8), a cover plate (9) and intervening inner guide elements (11), in that the guide elements (11) inside the insert (6) comprise narrow, upright strips each having a plurality of lugs which are provided on the long sides and with which the guide elements (11), the base plate (8) and the cover plate (9) are attached to one another, and in that the edges of the base plate (8) and the cover plate (9) have bends (13) provided at the front of the insert (6) and the two side parts each having a minimum radius of 35 mm.

2. Rack according to Claim 1, characterized in that the base plate (8) and the cover plate (9) of the insert (6) comprise identical parts which are mounted as mirror images to one another and whose bends (13) form trumpet-shaped funnels for deflecting optical waveguide cables (7) at the inlet and outlet openings.

3. Rack according to Claim 1 or 2, characterized in that a guide element (14) designed as a longitudinally bisected funnel is joined on at each of the rear ends of the bends (13) of the insert (6).

## Revendications

1. Etagère (1) pour des dispositifs de la technique des messages optiques, comportant plusieurs supports de sous-groupes (2) disposés les uns au-dessus des autres et de sous-groupes (4) insérés dans ces derniers et comportant des connecteurs (5) fixés sur le côté frontal avec des câbles à fibres optiques (7), au-dessous de chaque support de sous-groupe (2) étant disposé un tiroir (6) qui est doté d'une plaque de fond (8) et a des ouvertures d'entrée et de sortie prévues sur les deux parties latérales et sur le côté frontal et destinées aux câbles à fibres optiques (7) qui arrivent et/ou partent des gaines de câblage latérales de l'étagère (1), caractérisée en ce que le tiroir (6) se compose de la plaque de fond (8), d'une plaque de recouvrement (9) et d'éléments de guidage (11) intérieurs insérés entre, en ce que les éléments de guidage (11) à l'intérieur du tiroir (6) comprennent des bandes étroites et placées de chant avec respectivement plusieurs languettes prévues sur les côtés longitudinaux qui permettent de fixer les uns contre les autres, les éléments de guidage (11) ainsi que les plaques de fond et de recouvrement (8, 9) et en ce que les arêtes de la plaque de fond (8) et de la plaque de recouvrement (9) présentent respectivement sur le côté frontal du tiroir (G) et les deux parties latérales, une courbure (13) réalisée avec un rayon minimum de 35 mm.

2. Etagère selon la revendication 1, caractérisée en ce que la plaque de fond (8) et la plaque de recouvrement (9) du tiroir (6) comportent des pièces identiques, montées en symétrie l'une par rapport à l'autre et dont les courbures (13) forment sur les ouvertures d'entrée et de sortie, des cônes en forme de trompette pour le coudage des câbles à fibres optiques (7).

3. Etagère selon la revendication 1 ou 2, caractérisée en ce qu'on fixe respectivement à chaque extrémité arrière des courbures (13) du tiroir (6) un élément de guidage (14) réalisé comme un cône divisé en deux dans le sens longitudinal.
